# EUROPEAN PATENT SPECIFICATION

(11) **EP 2 490 814 B1**
(45) Date of publication and mention of the grant of the patent: **14.01.2015**
(21) Application number: 10781975.7
(22) Date of filing: 22.10.2010
(51) Int. Cl.: B01L 3/02, G01N 21/00

(54) **PIPETTE, APPARATUS AND KIT FOR LIGHT MEASUREMENT AND METHOD**
PIPETTE, GERÄT UND KIT ZUR LICHTMESSUNG UND VERFAHREN
PIPETTE, APPAREIL ET KIT POUR LA MESURE DE LA LUMIÈRE ET PROCÉDÉ CORRESPONDANT

(30) Priority: 22.10.2009 GB 0918543; 20.01.2010 GB 201000864
(43) Date of publication of application: 29.08.2012
(73) Proprietor: Page, Brian, Crowborough, East Sussex BN8 5NN (GB)
(72) Inventor: Page, Brian, Crowborough, East Sussex BN8 5NN (GB)
(74) Representative: Richards, Michèle E.
(86) International application number: PCT/GB2010/001959
(87) International publication number: WO 2011/048382

(56) References cited:
- EP-A1- 1 054 250
- EP-A1- 1 684 060
- EP-A2- 0 666 472
- GB-A- 2 343 248
- US-A- 5 416 879

## Description

### TECHNICAL FIELD

The present invention relates to a pipette for use in spectrophotometrical analyses, and to an apparatus and a kit for the measurement of light absorbed by or emitted from a liquid sample. The present invention also relates to a method of using the pipette, apparatus and kit.

### BACKGROUND ART

In recent years a great deal of technology has been developed to handle small volumes of liquid samples. Pipettes are liquid handling tools that are commonly used in molecular biology as well as in medical tests. Conventional pipettes generally include an elongated cylindrical body having at one end a coaxially mounted pipette tip, a cylindrical piston within a cavity of the pipette body, and an actuating mechanism for actuating the piston. The actuating mechanism may cause the piston to perform an upward stroke so that liquid is aspirated into the pipette tip or a downward stroke so that liquid is dispensed from the pipette tip.

In a wide range of fields, samples are analyzed by measuring their light absorbance. Biological samples such as nucleic acids and proteins are analyzed in this manner in the biotechnological field, for example. In a spectrophotometer, light having a known intensity at a variety of wavelengths is beamed at a sample, the light is detected after it has passed through the sample and is analysed for the absence, or reduced intensity levels, of certain wavelengths of light. This information, along with sample thickness, is used to identify and measure the concentration of substances in the sample.

Samples that produce fluorescence or luminescence may be analyzed by measuring their light output. Measurement of the intensity or life of fluorescence or luminescence emitted from a sample provides information on the physical or chemical properties of the sample.

Biological samples may only be available in minute amounts for analysis and quantitative determination. For analysis in a light measuring apparatus, such as a spectrophotometer or fluorometer, the sample to be analysed is usually contained in a vessel referred to as a cell or cuvette, whose sides permit the passage of those wavelengths needed to characterize the sample contained therein. In an apparatus of the kind described, an optical beam of light generally enters the cuvette through one transparent end of the cuvette and exits the cuvette at the opposite end thereof. The characteristics of the beam emerging from the cuvette are then analysed to determine the composition of the fluid through which the light beam has passed and which is contained in the cuvette. Since the light beam has to pass through the cuvette, the transparent material thereof may cause inaccuracies in the determination of the composition of the fluid.

Further, due to the minute size of the samples analysed in the apparatus described, problems arise such as loss of sample due to transfer from pipette to cuvette, sample volume being too small for the size of the cuvette, evaporation of sample during analysis, recovery of sample after analysis, and contamination of sample after recovery.

Moreover, when a sample to be analysed has a high density, additional measures may need to be taken to reduce sample density prior to light measurement so that sufficient light from the light source can pass through the sample for detection by the photo detector. An example of a known measure to reduce sample density is dilution of the sample prior to light measurement. On the other hand, when a sample has a low density, the intensity of light passing through the sample from the light source may be too high for measurement by the photo detector.

An apparatus with an aborbance measuring pipette is described in EP-A -1054250.

There is therefore a need to increase the accuracy of spectrophotometrical analyses done on fluids, especially liquids, such as pure liquids, solutions, dispersions, colloidal solutions or the like, particularly on minute volumes of liquids.

### SUMMARY OF THE INVENTION

The present invention provides a novel pipette, an apparatus and a kit for use in the spectrophotometrical analysis of a fluid sample, and a method for use of the same, in which the above mentioned problems associated with the analysis and quantification of minute amounts of fluid sample are overcome.

In accordance with a first aspect, the present invention provides a pipette comprising a body portion for aspirating a fluid sample into a pipette tip when attached thereto, the body portion comprising at least one light source providing an optical path of light that passes through the sample in a direction essentially along the longitudinal axis of the pipette tip. Preferably, the body portion is additionally adapted for discharging fluid through the intake or unattached opening of the pipette tip.

The pipette according to the first aspect of the present invention may include the pipette tip attached to the body portion. The light source is preferably provided within the pipette body. When the light source is provided remote from the pipette body, preferably light from the light source is guided by means of, for example, an optical cable or fibre to the open end of the pipette tip that is attached to the pipette body so that the light passes through the inside of the pipette tip.

The pipette tip may be detachably retained on the body portion. In this way, the pipette tip may be removable from the body portion for disposal and replacement. Alternatively, the pipette tip may be integral with the body portion and may take the form of a pipette probe having an integral tip that is washed for re-use between sample collections to remove any contamination.

In accordance with a second aspect, the present invention provides a method for measuring light output from a fluid sample that produces luminescence, comprising providing a pipette tip or capillary tube having first and second open ends with the sample to be analysed contained therein, and detecting light output from at least one open end of the pipette tip or capillary tube.

When the fluid sample is one that when irradiated with light absorbs the light or fluoresces, the method preferably further comprises providing a light source, permitting light from the light source to enter one open end of the pipette tip or capillary tube, to pass through the sample contained therein, and to leave the pipette tip or capillary tube by its other open end for detection and analysis. The pipette tip or capillary tube is elongate and the path of light preferably passes through the sample contained in the pipette tip or capillary tube in a direction essentially along the longitudinal axis of the pipette tip or capillary tube.

The method according to the present invention preferably further comprises determining light emission or absorbance of the sample according to the intensity of the light detected.

In the method according to the present invention, the pipette tip is preferably retained on a pipette body during sample analysis and the method, optionally, further comprises recharging the pipette body during sample analysis. In a preferred method, the light source is provided within the pipette body.

The method according to the present invention preferably further comprises controlling the light input to the sample, for example the intensity and/or wavelength of light input to the sample.

In accordance with a third aspect, the present invention provides an apparatus for light measurement from a fluid sample, wherein the apparatus comprises a container for the sample in the form of a pipette tip or capillary tube having first and second open ends, and a photo detector for detecting light output from the sample, wherein the photo detector and the pipette tip or capillary tube are disposed so that light output from the first and/or second open end of the pipette tip or capillary tube is detected by the photo detector.

Preferably, the apparatus further comprises at least one light source, wherein the at least one light source is disposed to input light through one open end of the pipette tip or capillary tube so that the light passes through the sample contained therein, and wherein the photo detector is disposed to detect light output from the other open end of the pipette tip or capillary tube. The optical path of light from the light source preferably passes through the sample in a direction essentially along the longitudinal axis of the pipette tip or capillary tube.

More preferably, the apparatus further comprises light output guide means for guiding light output from a first open end of the pipette tip or capillary tube to the photo detector and/or light input guide means for guiding light from the light source to a second open end of the pipette tip or capillary tube. The light input and/or output guide means may take the form of an optical fibre or cable.

The apparatus may further include a pipette body, wherein the pipette tip is attached to the pipette body, such as being integral with, or detachably retained on, the pipette body.

In the apparatus according to the present invention, the at least one light source may be disposed within the pipette body. Ideally, a passageway is provided within the pipette body for directing light from the light source to the inside of the pipette tip and the passageway is preferably coated with a light reflective material. A piston may be provided within the pipette body and the light source may be attached to the piston. In one embodiment, the piston has an inner space and the light source is housed within the inner space, where, optionally, the walls of the inner space of the piston are coated with a light reflective material. In another embodiment, the piston is provided with an axial bore or optical fibre for guiding light from the light source to the pipette tip. The light source is preferably disposed on the longitudinal axis of the pipette body.

The apparatus according to the present invention preferably further comprises a holder for holding the pipette tip or capillary tube in position during light measurement. The holder may be adapted to hold a plurality of pipette tips and/or capillary tubes for simultaneous detection of light output from multiple samples. It may take the form of a rack or a plate with a plurality of apertures, for example. The holder may be adapted to hold a pipette body with attached pipette tip. The holder is preferably adapted to hold the pipette tip so that it is disposed in a generally horizontal plane. In this way, leakage of sample from the open ends of the pipette tip is avoided. Preferably, however, the diameters of the first and second openings of the pipette tip are such that the liquid sample is retained therein by means of its surface tension so there will be no leakage from the pipette tip even when positioned in a generally vertical plane.

The pipette tip may be mounted in the holder by the pipette body or probe with attached tip being manipulated manually or by means of a robotic arm. A frictional fit between the pipette tip and the holder may be provided such that the pipette tip with sample contained therein will remain on the holder when the pipette body is subsequently moved away. In one embodiment, the holder for the pipette tip is removable from the light measuring apparatus for loading and unloading purposes.

The apparatus according to the present invention may further comprise a fluid-tight housing for at least the pipette tip or capillary tube, wherein the inner space of the housing is in communication with the internal space of the pipette tip or capillary tube in use. In this way, interference from outside radiation is reduced. The light source may be disposed within the internal space of the apparatus.

In the case when the pipette body portion remains attached to the pipette tip during light measurement, the fluid tight housing of the apparatus includes an attachment portion for the pipette to allow the pipette to be in the correct position for sample analysis. One or more detents may be provided on the exterior surface of the pipette body portion for engagement with one or more indentations of the attachment portion. For example, the pipette body portion may be provided with a bayonet and the attachment portion may comprise a bayonet socket. In this manner, the pipette can be easily attached and detached from the apparatus. By having a holder or attachment portion, the pipette tip is held firmly in the measuring position so that misalignment of the optical axis of the optical path of light is reduced.

Preferably, the apparatus according to the present invention further comprises means for recharging the pipette body during light measurement. The light source in the pipette body may require recharging and/or the pipette may be an electronic pipette that requires recharging. The attachment portion or holder of the apparatus and the pipette according to the present invention may be provided with electrical connections in accordance with known methods to allow for recharging of the electronic pipette and/or the light source.

The apparatus or pipette according to the present invention preferably further comprise first control means for controlling the intensity of light entering the pipette tip and/or second control means for controlling the wavelength of light entering the pipette tip.

The apparatus or pipette according to the present invention preferably comprises a plurality of light sources, whereby each light source is disposed to irradiate light of a predetermined intensity and/or wavelength.

In accordance with a fourth aspect, the present invention provides a kit for light measurement, the kit comprising a pipette tip or capillary tube for containing a fluid sample to be analysed, the pipette tip or capillary tube having first and second open ends, and light output guide means for guiding light output from at least one open end of the pipette tip or capillary tube to a photo detector.

The kit may further comprise light input guide means for guiding light from a light source to one open end of the pipette tip or capillary tube so that the light passes through the sample and leaves by the other open end of the pipette tip or capillary tube.

An alternative kit according to the present invention comprises a pipette body portion for aspirating a fluid sample into a pipette tip when attached thereto, wherein the body portion comprises at least one light source, or at least one entry point for light from at least one light source, providing an optical path of light that passes through the sample in a direction essentially along the longitudinal axis of the pipette tip, and light output guide means for guiding light output from an open end of the pipette tip to a photo detector. The kit may further include one or more pipette tips for attachment to the pipette body portion. Preferably, the pipette body includes light source control means whereby the intensity of light (illuminance) is adjustable as required.

The light input and/or light output guide means may take the form of an optical fibre or cable.

In accordance with a fifth aspect, the present invention provides an apparatus for light measurement from a fluid sample, the apparatus comprising a container for the sample to be analysed, at least one light source for irradiating the sample with light, a detector for detecting light output from the sample, and a light source control for controlling the intensity of light input to the sample.

In the apparatus according to the fifth aspect of the present invention, the light source control may control light intensity in a number of different ways. For example, the light source control may control light intensity by varying the electrical power supplied to the light source. The electrical power may be varied between no power (OFF) and maximum power, with degrees of electrical power being selectable between OFF and maximum power. The light source may be implemented, for example, by a single Light Emitting Diode (LED) or by an array of LEDs to provide illumination. By adjusting the electrical power to one or more of the LEDs in the array, for example, by turning off one or more of the LEDs, light intensity may be reduced. The light source control may be a dimmer switch, for example, the operation of which is well known. In one embodiment, the distance of the light source relative to the sample may be adjusted to control the intensity of light beamed at a sample. In this regard, the light source may be movable towards or away from the sample to permit variation of the optical path length and thereby the intensity of light beamed at the sample. In another embodiment, a screen may be disposed between the sample and the light source having a variable aperture and the light source control may control light intensity by varying the size of the aperture in the screen. For example, the aperture may be constructed of a number of blades that can close down to form a smaller aperture or completely open to form the maximum aperture. In a yet further embodiment, a shutter may be disposed between the sample and the light source and the light source control may control light intensity by opening the shutter for a predetermined period of time. The aperture and shutter construction may be similar to that provided in a camera.

It is advantageous to be able to control light intensity. If the absorbance of the sample is high, that is, it has a high optical density, light of a high intensity is likely to be detected by the photo detector, whereas light of a low intensity is unlikely to be able to penetrate the sample and therefore may not be detected. Conversely, if the sample has a low optical density, light of a high intensity is likely to be out of range for the photo detector and therefore will not be detected, whereas light of lower intensity is likely to be detected and thereby will provide a quantifiable signal. Accordingly, by permitting the intensity of light from the light source to be adjustable, the light emitted from the sample may be controlled to be at a level that can be measured or is within the dynamic range of the photo detector.

The light source control may be used in any optical measuring system where it would be desirable to be able to control light intensity, including micro titre plate readers, for example.

The apparatus, pipette or kit according to the present invention may comprise a plurality of light sources and the intensity of each light source may be independently controllable.

A single sample may be irradiated with multiple light beams. Alternatively, a plurality of samples may be irradiated with respective light beams of different wavelengths or intensities, simultaneously.

The apparatus, kit or pipette body according to the present invention may comprise multiple input light guides for guiding light from one or more light sources to the pipette tip(s) and/or multiple output light guides for guiding multiple light beams output from the pipette tip(s) to respective multiple detectors. In an alternative embodiment, light from a single light source is divided into two or more light beams where each beam is directed to a different pipette tip.

The apparatus according to the fifth aspect may be a spectrophotometer having a light source control as described herein for controlling the intensity of light input to the sample.

The term "pipette tip" as used herein, is intended to encompass all types of pipette tips, including pipette tips used for automated and manual pipetting, positive displacement pipettes, the pipette tip may be integral with a pipette body, such as a pipette probe, pipette tips in the form of a capillary tube or pipette tips having a tapered inner passageway, pipette tips that are circular or flat in cross-section, and all other pipette tips. In general, the pipette tip has a hollow body which defines an interior volume and a channel therein extending from an intake opening to an attachment opening. Preferably, at least the intake opening of the pipette tip is of a diameter such that a liquid sample will be retained inside the pipette tip by means of its surface tension. The volume of the pipette tip may be in the range of 1 µm to 5 ml, typically greater than zero to 200 µm. Various plastics, e.g., polypropylene, silica, make ideal pipette tip materials as is well known in the art.

The "first open end" or "intake opening" of the pipette tip as used herein is the end from which a predetermined amount of liquid sample is aspirated and may be dispensed. The "second open end" or "attachment opening" of the pipette tip as used herein is the end that is adapted to engage with a pipette body. The pipette tip may be mounted on a pipette body by means of a frictional fit between coacting surfaces on the pipette tip and the pipette body, for example.

Preferably, the pipette tip for use in the apparatus or kit, or with the pipette body, in accordance with the present invention has substantially parallel inner walls in cross section taken along a central axis. The pipette tip preferably has a relatively long fine inner bore, like a capillary tube, so that the length of the path of light through the sample is relatively long even when the amount of the sample is minute. In this way, light passes through the maximum length of sample.

The term "pipette body", or "body portion" when used in relation to a pipette, is intended to include any fluid handling device that is capable of aspirating (i.e., drawing) a fluid into a column (pipette tip) attached thereto and, optionally, capable of discharging (i.e., expelling) fluid out of the column.

The pipette according to the present invention may be of the type having an elongated cylindrical body with a coaxially mounted pipette tip at one end, a cylindrical piston within a cavity of the pipette body, and an actuating mechanism for actuating the piston.

By use of a pipette tip as the container for both the collection and analysis of a sample, it is possible to accurately analyse small volumes of sample. In this way, dilution of a sample is not necessary and the problems mentioned above such as loss of sample through transfer from pipette tip to cuvette, evaporation of sample during analysis, reduced recovery and contamination of sample, are avoided.

According to the present invention, light irradiated at a fluid sample from a light source takes the longest possible path through the sample in the pipette tip. Thus, by use of the pipette tip as the container for sample analysis and by use of an optical path of light that passes in a direction essentially along the longitudinal axis of the pipette tip, the light takes a long path through the sample relative to the small volume of sample available for analysis resulting in an accurate measurement of the sample. Further, because light from the light source passes through the open ends of the pipette tip, it passes through only the sample, without having to pass through the material of the pipette tip, resulting in analyses that are independent of the material of the sample container.

The apparatus according to the present invention preferably further comprises means for measuring the length of sample column within the pipette tip. The means for measuring the length of sample column may comprise a digital camera.

When light is absorbed by the sample, the reduction of light transmission by means of sample volume relative to a control sample is determined, and when light is emitted from the sample, the increase in light emission by means of sample volume relative to a control sample is determined. The volume of sample may be calculated automatically from a determination of length of sample column and internal diameter of pipette tip. The pipette tip may include a scale for use in measuring the length of sample column within the tip.

Preferably, the photo detector is capable of detecting light intensities of a plurality of components having different wavelengths from the light output from the sample. The sensitivity of the photo detector can preferably be varied to permit the measurement of samples with a wide range of optical densities or wide range of optical emission intensities.

Preferably, the light measuring apparatus according to the present invention further comprises a receptacle for collecting excess sample dispensed from the pipette tip prior to light measurement or for collecting sample dispensed from the pipette tip after light measurement for re-use or disposal. The receptacle may be used, for example, to collect sample released from the pipette tip when it is desirable to reduce sample path length, such as when the sample is of high optical density. The receptacle may be axially moveable relative to the pipette tip when held in position to enable sample to be collected from pipette tips of different lengths.

Preferably, the light measuring apparatus according to the present invention comprises at least one lens for focussing light outputted from the sample to the photo detector. The pipette preferably comprises alternatively or additionally at least one lens disposed between the light source and the pipette tip for focussing light emitted from the light source into the pipette tip.

The pipette, apparatus or kit according to the present invention may be calibrated by passing a range of predetermined test light intensities or wavelengths from the light source through the pipette tip when there is either no sample or a predefined control or calibration sample (e.g. distilled water or other solvent for the specimen to be tested) in the pipette tip. The intensity or wavelength of the test light emitted from the pipette tip containing no sample or a control or calibration sample is detected by the photo detector to provide a reference value.

The photo detector outputs a signal corresponding to the intensity or wavelength of the light received from the sample. A change in light intensity is determined according to conventional methods. In one method, the signal output from the photo detector may be converted to a voltage signal and the voltage signal is fed to a computer which determines the light intensity corresponding to the voltage signal.

The apparatus according to the present invention preferably further comprises means for measuring the length of sample column within the pipette tip or capillary tube, optionally wherein the means comprises a digital camera.

The method according to the invention may accordingly include determining the length of the sample optical path. Sample optical path length may be calculated in a number of ways. It may be possible to visually measure path length by use of a separate scale or the pipette tip may be provided with a scale corresponding to the optical path length. Further, a camera may be used to determine or confirm the optical path length. The sample optical path length can also be determined from knowledge of the kind and form of the employed pipette tip and the amount of sample. A pipette can withdraw a known volume of sample, for example 1µl, and knowledge of the internal diameter or dimensions of the pipette tip permits the path length to be calculated. The information can be stored into a computer beforehand so that the path length can be easily determined.

### BRIEF DESCRIPTION OF DRAWINGS

Figure 1 is a longitudinal sectional view showing one embodiment of an apparatus in accordance with the present invention;
Figure 2 is a longitudinal sectional view showing a pipette in accordance with the present invention;
Figure 3 is a cross-sectional view taken along the line A-A' of Figure 2; and
Figure 4 is a schematic representation of an alternative embodiment of an apparatus in accordance with the present invention.

Preferred embodiments of this invention are described herein, including the best mode known to the inventor for carrying out the invention. It should be understood that the illustrated embodiments are exemplary only, and should not be taken as limiting the scope of the invention.

### DETAILED DESCRIPTION OF PREFERRED EMBODIMENTS

In the following, embodiments of the present invention will be described in detail with reference to the accompanying drawings, wherein like reference numerals represent like parts and assemblies throughout the several views.

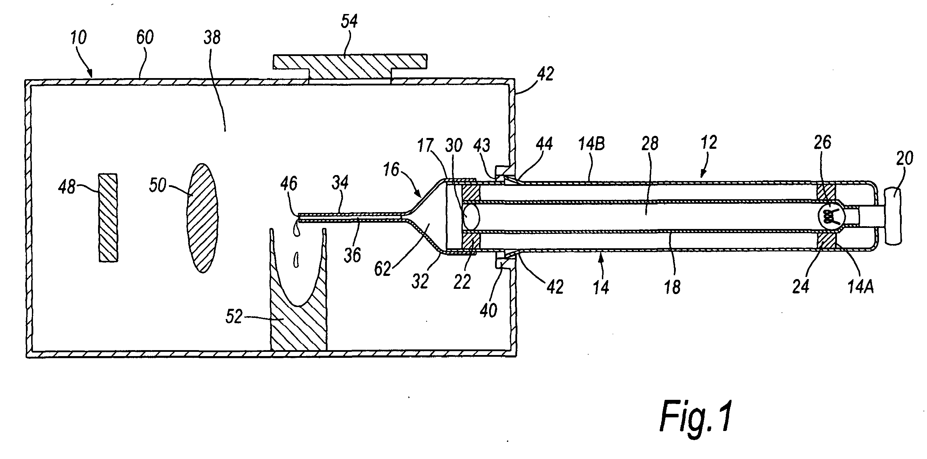

Figure 1 illustrates an apparatus for light measurement comprising a light detector 48 within a housing 10. A pipette, generally shown as 12, is attached to the housing 10 and comprises a pipette body 14 and a pipette tip 16. The pipette tip 16 and the distal end portion of the pipette body 14 are positioned within the inner space 38 of the housing 10 in the measuring position. The pipette body 14 includes a plunger mechanism comprising a piston 18 and a plunger button 20. Attached to one end of the piston 18 is an annular ring 22 that abuts the inner wall of the pipette body 14 to locate the piston 18 centrally within the pipette body 14 and provide an air tight seal. At the other end of the piston 18 is provided a further annular ring 24 that is fixed to the inner wall 14A of the pipette body 14 and allows the piston 18 to reciprocate back and forth therethrough. The piston 18 is hollow and a light source 26 in the form of a filament bulb is located within the hollow space 28 at the proximal end portion of the pipette body, near the plunger button 20. The filament bulb 26 is fixed in position within the hollow piston. In another embodiment, however, the filament bulb 26 may be movable axially along the hollow space 28 of the piston 18 to be closer to, or further away from, the pipette tip 16 thereby, respectively, increasing or decreasing the intensity of light input to the pipette tip 16, as required according to the density of the sample 36. A lens 30 is fixed at the distal end of the piston 18 that seals the hollow space 28. Light from the light source 26 is directed axially through the hollow space 28 within the piston body towards the pipette tip 16. After passing through the lens 30, parallel light is input to the sample 36 in the pipette tip 16.

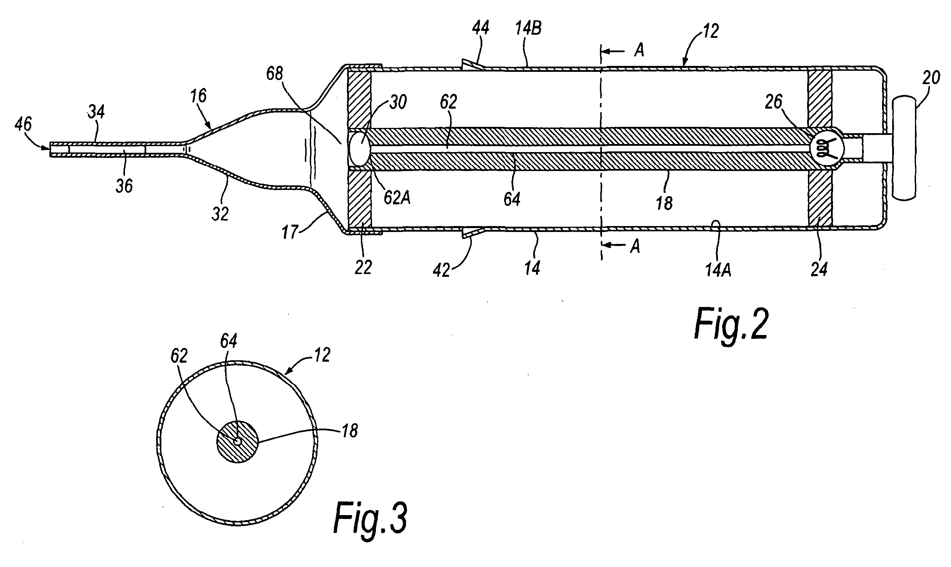

The pipette tip 16 comprises a first open end 46 for transferring a liquid sample into and out of the pipette tip 16 depending on the magnitude of the pressure generated inside the pipette tip 16, and a second open end 68 for attachment to the pipette body 14. The pipette tip 16 comprises an upper section 17 that tapers downwardly to a body section 34 that, in Figures 1 and 2, is in the form of a capillary tube. The distal end of the pipette body 14 is configured and dimensioned for axial insertion into the second open end 68 of the pipette tip 16 to establish an axially interengaged relationship between the coacting surfaces of the distal end of the pipette body 14 and the upper section 17 of the pipette tip 16 so that the pipette tip 16 is detachably retained on the pipette body 14. A liquid sample 36 for analysis is held in the inner passageway in the body section 34 of the pipette tip 16.

The pipette tip 16 and distal end portion of the pipette body 14 are located within the inner space 38 of the housing 10 for analysis of the sample 36 held in the pipette tip 16. The housing 10 has a pipette attachment portion 40 in one side wall 42 for receiving the pipette body 14. The pipette body 14 is provided on its outside wall 14B with a fixing in the form of two detents 42, 44 for engaging with respective recesses (not shown) provided in the inner wall 43 of the pipette attachment portion 40. When in position attached to the housing 10, the suction port 46 of the pipette tip 16 faces a light detector 48, and a lens 50 is located between the light detector 48 and the suction port 46 for focussing light output from the suction port 46 onto the light detector 48.

A receptacle 52 is provided below the suction port 46 of the tip 16 for collecting any excess sample 36 or any sample that after analysis is to be disposed of or retained and stored for re-use. The receptacle 52 is adapted to be movable axially relative to the pipette 12 so that it can collect samples released from pipette tips of different lengths. A digital camera 54 is provided on the outside of the spectrophotometer 10 having its lens 56 pointing through an aperture 58 in the wall 60 of the apparatus housing. The camera 54 is linked to a computer (not shown) and can be used to determine or confirm the length of the sample column 36 in the body portion 34 of the pipette tip 16. Camera exposure may be synchronised with absorbance measurement.

Figure 2 illustrates an alternative pipette 12 in accordance with the present invention. The pipette 12 is similar to the pipette 12 illustrated in Figure 1, except that the piston 18 has an optic fibre 62 that passes through an axial bore 64 in the piston 18 (see also Figure 3) to direct light from the light source 26 to the pipette tip 16. The lens 30 at the distal end of the piston 18 converts the light outputted from the end 62A of the optical fibre 62 into parallel light, which is directed towards the suction port 46 of the pipette tip 16 in a direction along the longitudinal axis of the pipette tip 16.

Depression of the plunger button 20 under finger pressure against the tension of a spring (not shown) causes delivery of liquid sample 36 from the capillary tube portion 34 of the pipette tip 16. By permitting the tension of the coil spring to reverse the direction of movement of the piston 18 and plunger button 20, liquid is drawn into the capillary tube portion 34. Sample optical path length is determined from the amount of the sample 36 contained in the tip 16. The amount of sample 36 contained in the pipette tip 16 may be determined from the length of the sample column in the tip 16 and a knowledge of the bore diameter in the tip 16. The amount of sample in the tip 16 may also be known from the setting on the pipette 12.

When a second sample is to be analysed, the pipette tip 16 is either washed or replaced. The first sample 36 is dispensed from the tip 16 and collected in the receptacle 52 by depression of the plunger button 20. The receptacle 52 containing the sample may be stored, for example, so that the sample can be subjected to further tests, or washed for re-use. Alternatively, the receptacle 52 may be disposed of and replaced.

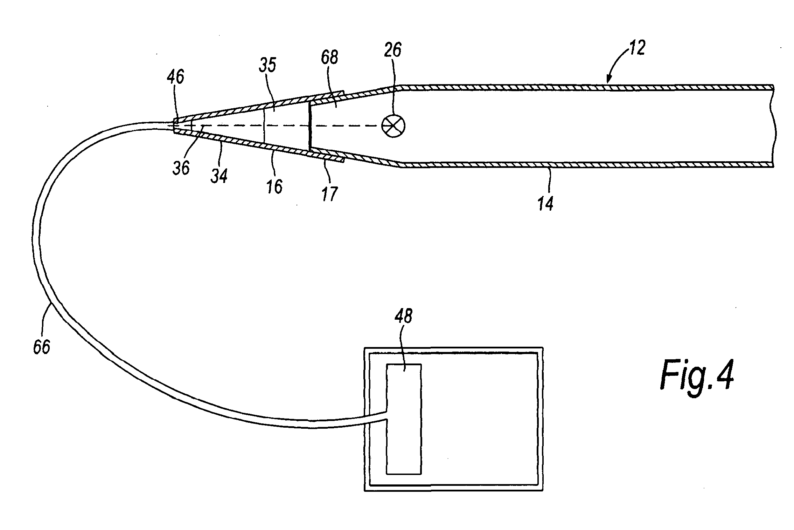

Figure 4 illustrates an apparatus comprising a pipette 12, shown partially cut away, which is linked to a light detector 48 by means of a fibre optic cable 66. The pipette 12 comprises a pipette body 14 and a pipette tip 16, and within the distal end portion of the pipette body 14 is an LED light source 26 that beams light towards the pipette tip 16. A dimmer switch (not shown) is provided to adjust the intensity of light emitted from the light source 26, according to sample density. The pipette tip 16 comprises a first open end 46 for transferring a liquid sample 36 into and out of the pipette tip 16 depending on the magnitude of the pressure generated inside the pipette tip 16, and a second open end 68 for attachment to the pipette body 14. The pipette tip 16 comprises an upper section 17 and a body section 34 leading from the upper section and tapering downwardly to a reduced diameter first open end 46. The surface of the distal end of the pipette body 14 acts against the surface of the upper section of the pipette tip 16 to provide a frictional fit between coacting surfaces. The pipette tip 16 has a tapered inner passageway 35 and a liquid sample 36 for analysis is held in the inner passageway 35 in the body section 34 of the pipette tip 16.

The light detector 48 is provided within a housing 10 in a fluid-tight environment. A fibre optic cable 66 connects the first open end 46 of the pipette tip 16 to the photo detector 48. With the liquid sample 36 held in the pipette tip 16, light from the light source 26 is input to the second open end 68 of the pipette tip 16 and passes through the whole volume of the sample 36 in a direction along the longitudinal axis of the pipette tip 16 (direction is shown with dashed lines), and any emitted light exits through the first open end 46. The light that exits the first open end 46 is guided by the fibre optic cable 66 to the light detector 48. An electrical signal proportional to the light detected by the light detector 48 is generated and analysed for determining quantitative or qualitative characteristics of the pipetted sample 36.

In an alternative embodiment, the light source 26 in Figure 4 may be provided within the housing 10 for the detector 48 instead of within the pipette body 14 and optical guide means, such as an optical fibre, may be used to direct light output from the light source 26 to the pipette tip 16.

In a further alternative embodiment, the pipette body 14 in Figure 4 may be absent and the light source 26 may be disposed to input light either directly or indirectly, for example via an optical fibre or cable, into the second open end 68 of the pipette tip 16 so that the light passes through the sample 36 in a direction along the longitudinal axis of the pipette tip 16.

The light source 26 may be a laser, LED, traditional filament bulb, or other light source. The light source may produce entirely visible light or light at least mainly at the infrared or ultraviolet range or a given waveband thereof.

The specific embodiments described above are for analysis of a sample that will absorb light that is beamed through it. When the sample comprises a fluorescent material, a fluorometer is employed, wherein light, usually ultraviolet light, from the light source that is beamed through the sample causes the sample to emit light of a different energy or wavelength, typically visible light, and the emitted light is detected by a detector. When a luminescent sample is used, light is emitted from the sample for detection by the light detector and a separate light source is not required.

The use of the terms "a" and "an" and "the" and similar referents in the context of describing the invention (especially in the context of the following claims) are to be construed to cover both the singular and the plural, unless otherwise indicated herein or clearly contradicted by context.

All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed.

Although the specific embodiments described above relate to manual pipettes, the present invention is also applicable to automatic pipettes in which the piston is moved electronically according to input instructions. Indeed, it will be apparent to the skilled person that the present invention may be applied to various different kinds of pipettes, from those having pipette tips that can be discarded after use to those having probe tips provided with non retentive coatings, such as Teflon®, as used in robotic sample processors, for example.

Further, the embodiments described above relate to single channel pipettes but the invention is equally applicable to multi-channel pipettes. It would be desirable to use multi-channel pipettes in a high-throughput screening method, for example. The absorbance measuring apparatus according to the invention would in this case be modified to have a plurality of pipette attachment portions and a plurality of photodetectors.

## Claims

1. A pipette (12) comprising a body portion (14) for aspirating a fluid sample (36) into a pipette tip (16) when attached thereto, at least one light source (26) disposed within the body portion (14), wherein the at least one light source (26) provides an optical path of light that passes through the sample (36) in a direction essentially along the longitudinal axis of the pipette tip (16).

2. A pipette (12) according to claim 1, including a pipette tip (16) attached to the body portion (14).

3. A pipette (12) according to claim 1 or claim 2, wherein the light source (26) is disposed on the longitudinal axis of the body portion (14).

4. A pipette (12) according to claim 1 or claim 2, wherein a passageway (28, 64) is provided within the pipette body (14) for directing light from the light source (26) to the pipette tip (16), optionally wherein the passageway (28, 64) is coated with a light reflective material.

5. A pipette (12) according to any one of the preceding claims, further comprising first control means for controlling the intensity of light entering the pipette tip (16) and/or second control means for controlling the wavelength of light entering the pipette tip (16).

6. A pipette (12) according to any one of the preceding claims, comprising a plurality of light sources (26), whereby each light source (26) is disposed to irradiate light of a predetermined intensity and/or wavelength, optionally wherein the intensity of light from each light source is independently controllable.

7. A pipette (12) according to claim 5, wherein the first control means controls light intensity by (i) varying the electrical power supplied to the light source (26); or (ii) adjusting the distance of the light source (26) relative to the sample (36).

8. A pipette (12) according to claim 5, further comprising (i) a screen having a variable aperture disposed between the sample (36) and the light source (26), wherein the first control means controls light intensity by varying the size of the aperture; or (ii) a shutter disposed between the sample (36) and the light source (26), wherein the first control means controls light intensity by opening the shutter for a predetermined period of time.

9. An apparatus (11) for light measurement from a fluid sample (36), the apparatus (11) comprising a pipette according to any one of claims 1 to 8 and a photo detector (48) for detecting sample (36) light output from an open end (46) of the pipette tip (16).

10. An apparatus (11) according to claim 9, further comprising (i) light output guide means (66) for guiding light output from the open end (46) of the pipette tip (16) to the photo detector (48); and/or (ii) means for recharging the pipette body (14) during light detection.

11. An apparatus (11) according to claim 9 or claim 10, further comprising a holder for holding the pipette (12) in position during light measurement, optionally wherein the holder is adapted to hold a plurality of pipettes (12) for simultaneous detection of light output from multiple samples (36).

12. An apparatus (11) according to any one of claims 9 to 11, further comprising a fluid-tight housing (10) wherein the inner space (38) of the housing (10) is in communication with the internal space of the pipette tip (16) in use.

13. An apparatus (11) according to any one of claims 9 to 12, wherein the longitudinal axis of the pipette (12) lies in an essentially horizontal or an essentially vertical plane in use.

14. An apparatus (11) according to any one of claims 9 to 13, further comprising means for measuring the length of sample column within the pipette tip (16), optionally wherein the means comprises a digital camera (54).

15. A kit for light measurement, comprising a pipette (12) according to any one of claims 1 to 8, and light output guide means (66) for guiding light output from an open end (46) of the pipette tip (16) to a photo detector (48).

## Patentansprüche

1. Pipette (12) mit einem Körperteil (14) zum Aspirieren eines flüssigen Probe (36) in eine Pipettenspitze (16), wenn diese daran angebracht ist, und mit mindestens einer Lichtquelle (26), die innerhalb des Körperteils (14) angeordnet ist, wobei die mindestens eine Lichtquelle (26) einen optischen Lichtpfad schafft, der die Probe (36) in einer Richtung durchquert, die im Wesentlichen entlang einer Längsachse der Pipettenspitze (16) verläuft.

2. Pipette (12) nach Anspruch 1, mit einer an dem Körperteil (14) angebrachten Pipettenspitze (16).

3. Pipette (12) nach Anspruch 1 oder 2, wobei die Lichtquelle (26) auf der Längsachse des Körperteils (14) angeordnet ist.

4. Pipette (12) nach Anspruch 1 oder 2, wobei ein Durchgang (28, 64) innerhalb des Pipettenkörpers (14) vorgesehen ist, um Licht von der Lichtquelle (26) zu der Pipettenspitze (16) zu leiten, wobei der Durchgang (28, 64) optional mit einem Licht reflektierenden Material beschichtet ist.

5. Pipette (12) nach einem der vorhergehenden Ansprüche, weiterhin mit ernsten Steuermitteln zum Steuern der Intensität des in die Pipettenspitze (16) eintretenden Lichts und/oder mit zweiten Steuernmitteln zum Steuern der Wellenlänge des in die Pipettenspitze (16) eintretenden Lichts.

6. Pipette (12) nach einem der vorhergehenden Ansprüche, mit einer Vielzahl von Lichtquellen (26), wobei jede Lichtquelle (26) angeordnet ist, um Licht mit einer vorgegebenen Intensität und/oder Wellenlänge abzustrahlen, wobei die Intensität des Lichts von jeder Lichtquelle optional unabhängig steuerbar ist.

7. Pipette (12) nach Anspruch 5, wobei das erste Steuermittel die Lichtintensität steuert, indem es (I) die der Lichtquelle (26) zugeführte elektrische Leistung variiert oder (II) den Abstand der Lichtquelle (26) zur Probe (36) einstellt.

8. Pipette (12) nach Anspruch 5, weiterhin mit (I) einer Abschirmung mit variabler Apertur zwischen der Probe (36) und der Lichtquelle (26), wobei das erste Steuermittel die Lichtintensität steuert, indem es die Größe der Apertur variiert; oder mit (II) einer Verschlussblende zwischen der Probe (36) und der Lichtquelle (26), wobei das erste Steuermittel die Lichtintensität steuert, indem es die Verschlussblende für eine vorgegebene Zeitdauer öffnet.

9. Gerät (11) zur Lichtmessung an einer flüssigen Probe (36), wobei das Gerät (11) eine Pipette nach einem der Ansprüche 1 bis 8 und einen Fotodetektor (48) zum Detektieren des von Probe (36) aus einem offenen Ende (46) der Pipettenspitze (16) abgestrahlten Lichts umfasst.

10. Gerät (11) nach Anspruch 9, weiterhin mit (I) Lichtleitmitteln (66) zum Leiten des aus dem offenen Ende (46) der Pipettenspitze (16) austretenden Lichts auf den Fotodetektor (48); und/oder mit (II) Mitteln zum Aufladen des Pipettenkörpers (14) während der Lichtdetektion.

11. Gerät (11) nach Anspruch 9 oder 10, weiterhin mit einer Halterung zum Festhalten der Pipette (12) während der Lichtmessung, wobei die Halterung optional dafür vorgesehen ist, eine Vielzahl von Pipetten (12) zur gleichzeitigen Detektion des von mehreren Proben (36) abgestrahlten Lichts festzuhalten.

12. Gerät (11) nach einem der Ansprüche 9 bis 11, weiterhin mit einem flüssigkeitsdichten Gehäuse (10), wobei der Innenraum (38) des Gehäuses (10) bei Verwendung in Verbindung mit dem Innenraum der Pipettenspitze (16) steht.

13. Gerät (11) nach einem der Ansprüche 9 bis 12, wobei die Längsachse der Pipette (12) bei Verwendung im Wesentlichen horizontal verläuft oder im Wesentlichen auf einer vertikalen Ebene liegt.

14. Gerät (11) nach einem der Ansprüche 9 bis 13, weiterhin mit Mitteln zum Messen der Länge der Probensäule innerhalb der Pipette (16), wobei das Mittel optional eine Digitalkamera (54) umfasst.

15. Kit zur Lichtmessung, umfassend eine Pipette (12) nach einem der Ansprüche 1 bis 8 und Lichtleitmittel (66) zum Leiten des aus einem offenen Ende (46) der Pipettenspitze (16) austretenden Lichts auf einen Fotodetektor (48).

## Revendications

1. Pipette (12) comprenant une portion de corps (14) pour aspirer un échantillon de liquide (36) dans un embout de pipette (16) lorsqu'il est fixé sur celle-ci, au moins une source de lumière (26) étant disposée dans la portion de corps (14), dans laquelle ladite au moins une source de lumière (26) définit un chemin optique de lumière qui passe à travers l'échantillon (36) dans une direction essentiellement parallèle à l'axe longitudinal de l'embout de pipette (16).

2. Pipette (12) selon la revendication 1, incluant un embout de pipette (16) fixé sur la portion de corps (14).

3. Pipette (12) selon la revendication 1 ou la revendication 2, dans laquelle la source de lumière (26) est disposée sur l'axe longitudinal de la portion de corps (14).

4. Pipette (12) selon la revendication 1 ou la revendication 2, dans laquelle un canal de passage (28, 64) est prévu dans le corps de pipette (14) pour diriger la lumière depuis la source de lumière (26) jusqu'à l'embout de pipette (16), dans laquelle éventuellement le canal de passage (28, 64) est revêtu d'un matériau réfléchissant la lumière.

5. Pipette (12) selon l'une quelconque des revendications précédentes, comprenant en outre des premiers moyens de contrôle pour contrôler l'intensité de la lumière entrant par l'embout de pipette (16) et/ou des seconds moyens de contrôle pour contrôler la longueur d'onde de la lumière entrant par l'embout de la pipette (16).

6. Pipette (12) selon l'une quelconque des revendications précédentes, comprenant une pluralité de sources de lumière (26), moyennant quoi chaque source de lumière (26) est disposée de manière à diffuser une lumière d'une intensité et/ou d'une longueur d'onde prédéterminées, dans laquelle l'intensité de lumière de chaque source de lumière est éventuellement contrôlable indépendamment.

7. Pipette (12) selon la revendication 5, dans laquelle les premiers moyens de contrôle contrôlent l'intensité de la lumière (i) en faisant varier la puissance électrique fournie à la source de lumière (26) ; ou (ii) en ajustant la distance de la source de lumière (26) relativement à l'échantillon (36).

8. Pipette (12) selon la revendication 5, comprenant en outre (i) un écran ayant une ouverture variable disposé entre l'échantillon (36) et la source de lumière (26), dans laquelle les premiers moyens de contrôle contrôlent l'intensité de la lumière en faisant varier la taille de l'ouverture ; ou (ii) un obturateur disposé entre l'échantillon (36) et la source de lumière (26), dans laquelle les premiers moyens de contrôle contrôlent l'intensité de la lumière en ouvrant l'obturateur pendant une période de temps prédéterminée.

9. Appareil (11) pour la mesure de la lumière dans un échantillon de liquide (36), l'appareil (11) comprenant une pipette selon l'une quelconque des revendications 1 à 8 et un photodétecteur (48) pour détecter le flux lumineux dans l'échantillon (36) depuis une extrémité ouverte (46) de l'embout de pipette (16).

10. Appareil (11) selon la revendication 9, comprenant en outre (i) des moyens de guidage du flux lumineux (66) pour guider le flux lumineux depuis l'extrémité ouverte (46) de l'embout de pipette (16) jusqu'au photodétecteur (48) ; et/ou (ii) des moyens pour recharger le corps de pipette (14) durant la détection de lumière.

11. Appareil (11) selon la revendication 9 ou la revendication 10, comprenant en outre un support pour maintenir la pipette (12) en position durant la mesure de la lumière, dans lequel éventuellement le support est adapté pour contenir une pluralité de pipettes (12) pour la détection simultanée du flux lumineux dans les multiples échantillons (36).

12. Appareil (11) selon l'une quelconque des revendications 9 à 11, comprenant en outre un boîtier étanche (10) dans lequel l'espace intérieur (38) du boîtier (10) est en communication avec l'espace interne de l'embout de pipette (16) pendant l'utilisation.

13. Appareil (11) selon l'une quelconque des revendications 9 à 12, dans lequel l'axe longitudinal de la pipette (12) se trouve dans un plan essentiellement horizontal ou un plan essentiellement vertical pendant l'utilisation.

14. Appareil (11) selon l'une quelconque des revendications 9 à 13, comprenant en outre des moyens pour mesurer la longueur de la colonne d'échantillon dans l'embout de pipette (16), dans lequel éventuellement les moyens comprennent une caméra numérique (54).

15. Kit pour la mesure de la lumière, comprenant une pipette (12) selon l'une quelconque des revendications 1 à 8, et des moyens de guidage du flux lumineux (66) pour guider le flux lumineux depuis une extrémité ouverte (46) de l'embout de pipette (16) jusqu'à un photodétecteur (48).
